# EUROPÄISCHE PATENTSCHRIFT

(11) **EP 2 069 741 B1**
(45) Veröffentlichungstag und Bekanntmachung des Hinweises auf die Patenterteilung: **01.03.2017**
(21) Anmeldenummer: 07765162.8
(22) Anmeldetag: 11.07.2007
(51) Int. Cl.: G01M 1/10, G01M 17/00, G01L 5/16

(54) **VORRICHTUNG UND VERFAHREN ZUR BESTIMMUNG DER TRÄGHEITSPARAMETER EINES KÖRPERS**
DEVICE AND METHOD FOR DETERMINING THE INERTIAL PARAMETERS OF A BODY
DISPOSITIF ET PROCÉDÉ DE DÉTERMINATION DES PARAMÈTRES D'INERTIE D'UN CORPS

(30) Priorität: 06.10.2006 DE 102006047787
(43) Veröffentlichungstag der Anmeldung: 17.06.2009
(73) Patentinhaber: Rheinisch-Westfälisch-Technische Hochschule Aachen, 52062 Aachen (DE)
(72) Erfinder: GOERTZ, Harald, 72072 Tübingen (DE); STRAUCH, Jan, 23569 Lübeck (DE); PETER, Boris, 12524 Berlin (DE)
(74) Vertreter: Cohausz Hannig Borkowski Wißgott
(86) Internationale Anmeldenummer: PCT/EP2007/006142
(87) Internationale Veröffentlichungsnummer: WO 2008/043401

(56) Entgegenhaltungen:
- DE-A1- 2 717 454
- DE-A1-102005 060 602
- DE-C1- 4 317 058
- JP-A- 2001 324 409
- US-A- 3 040 563
- HAHN H ET AL: "Inertia parameter identification of rigid bodies using a multi-axis test facility" CONTROL APPLICATIONS, 1994., PROCEEDINGS OF THE THIRD IEEE CONFERENCE ON GLASGOW, UK 24-26 AUG. 1994, NEW YORK, NY, USA,IEEE, 24. August 1994 (1994-08-24), Seiten 1735-1737, XP010130886 ISBN: 0-7803-1872-2

## Beschreibung

Die Erfindung betrifft eine Vorrichtung zur Bestimmung der Trägheitsparameter eines Körpers, insbesondere eines Kraftfahrzeugs, die eine Aufnahmeplattform umfasst, auf welcher der Körper positionierbar ist und die ein zentrales, sphärisches Gelenk aufweist, um welches die Aufnahmeplattform bewegbar ist. Die Erfindung betrifft weiterhin ein Verfahren zur Ermittlung der Trägheitsparameter eines Körpers.

Unter den Trägheitsparametern werden im Rahmen dieser Erfindung bezogen auf ein kathesisches Koordinatensystem im Wesentlichen 10 Parameter verstanden, die für einen Körper, insbesondere einen beliebigen starren Körper, gegeben sind durch die Masse, die Lage des Schwerpunktes in den drei möglichen Raumkoordinaten, die drei Hauptträgheitsmomente bezüglich der jeweiligen drei Raumrichtungen sowie die drei sogenannten Deviationsmomente, die die gegenseitige Beeinflussung der drei Raumrichtungen untereinander beschreiben.

Sinn und Zweck der Ermittlung dieser Trägheitsparameter ist z.B. ein Bedarf bei der Simulation des dynamischen Fahrzeugverhaltens bei der Fahrzeugentwicklung sowie auch beispielsweise bei der Entwicklung von Fahrdynamikreglern, die in Kraftfahrzeugen zum Einsatz kommen, wie beispielsweise bei der Anwendung eines Antiblockiersystems, bei den Bremsen oder auch eines elektronischen Stabilisierungsprogramms, welches regulierend bei kritischen Fahrsituationen automatisch eingreift. Solche Fahrdynamikregler oder auch Simulationsmodelle, die bei der Fahrzeugentwicklung eingesetzt werden, benötigen als Grundlage die jeweiligen Trägheitsparameter, um die notwendigen Berechnungen durchführen zu können. Darüber hinaus können ganz allgemein die Trägheitsparameter beliebiger Körper von Interesse sein.

Die Bestimmung von Trägheitsparametern eines beliebigen Körpers ist grundsätzlich im Stand der Technik bekannt. Hierbei sind die bekannten Verfahren oder Vorrichtungen jedoch üblicherweise nur eingeschränkt nutzbar und gestatten die Bestimmung der Trägheitsparameter teilweise nur nach entsprechenden Umbauten der Vorrichtung und sind zum anderen nur mit aufwendig programmierten Algorithmen möglich.

Eine gattungsgemäße Vorrichtung offenbart beispielsweise die Offenlegungsschrift DE 27 17 454. Die dort beschriebene Vorrichtung ermöglicht jedoch nur die Bestimmung des Schwerpunktes und des Massenträgheitsmomentes. Auch ist aufgrund der antriebslosen Ausgestaltung der Vorrichtung das dynamische Fahrzeugverhalten nicht erfassbar. Vorrichtungen, um einen Prüfkörper mit mehreren Freiheitsgraden zu bewegen sind auch bekannt aus den Dokumenten DE 43 17 058 C1 und der Veröffentlichung "INERTIA PARAMETER IDENTIFICATION OF RIGID BODIES USING A MULTI-AXIS TEST FACILITY" von H. Hahn, K.-D. Leimbach und A. Piepenbrink in Control Applications 1994, Proceedings of the third IEEE Conference on Glasgow, UK, 24-26 Aug. 1994, New York, NY, Seiten 1735-1737.

Aufgabe der Erfindung ist es, eine Vorrichtung und ein Verfahren bereitzustellen, mit denen die Trägheitsparameter, insbesondere die vorgenannten 10 Trägheitsparameter, eines beliebigen Körpers und bevorzugt eines Kraftfahrzeugs messbar sind, insbesondere mittels eines automatisierten Programmablaufs und einer konstruktiv vereinfachten Vorrichtung.

Gelöst wird diese Aufgabe dadurch, dass das zentrale sphärische Gelenk unterhalb der Aufnahmeplattformoberfläche angeordnet ist und die Aufnahmeplattform mittels Antrieben in drei Freiheitsgraden bewegbar ist, wobei die Aufnahmeplattform über das zentrale Gelenk mit einem Antriebsgestell verbunden ist, an welchem wenigstens drei Antriebe angeordnet sind, die in einem Abstand vom zentralen Gelenk an der Aufnahmeplattform in Gelenken angreifen. Die Erfindung wird weiterhin durch ein Verfahren gelöst, bei dem in Verbindung mit einer solchen Vorrichtung ein Steuersystem vorgesehen ist, mittels dem die Aufnahmeplattform und ein darauf befestigter Körper, wie beispielsweise ein Kraftfahrzeug, um einen zentralen Drehpunkt in drei Freiheitsgraden bewegbar ist, wobei die gemessenen Winkel in den Gelenken, an denen Antriebe angreifen, einer Auswertung zugeführt werden, mit der, insbesondere durch Anwendung mechanischer Gesetzmäßigkeiten, wie beispielsweise des Drallsatzes, die Trägheitsparameter des Körpers bestimmt werden.

Der Erfindung liegt hierbei zugrunde, dass die Bewegung eines Körpers, wie beispielsweise eines Kraftfahrzeugs, in drei translatorischen sowie drei rotatorischen Freiheitsgraden durch allgemeine Bewegungsgleichungen beschrieben werden kann. Sind dabei für einen betrachteten Bewegungsablauf bei kleinen Winkelgeschwindigkeiten der Bewegung Kreiselmomente vernachlässigbar und besitzt der Prüfkörper keine oder im Wesentlichen keine Deviationsmomente, so sind bei Anwendung z.B. des Drallsatzes die drei Komponentengleichungen für die Drehung des Körpers um dessen Schwerpunkt unabhängig voneinander.

Das Einwirken eines Momentes um eine beliebige Achse hat dann nur eine beschleunigte Drehbewegung um gerade diese Achse zur Folge, ohne dass eine Wechselwirkung auf andere Achsen auftritt. Erfindungsgemäß wird somit ein günstiger Bewegungsablauf darin gesehen, rotatorisch beschleunigte Bewegungsanteile um drei unabhängige Achsen zu erreichen.

Die Erfindung erzielt dies dadurch, dass eine Aufnahmeplattform bereit gestellt wird, die ein zentrales, sphärisches Gelenk aufweist, so dass eine Bewegung um drei beliebige Achsen, beispielsweise die Achsen eines karthesischen Koordinatensystems um einen Drehpunkt möglich ist, der durch das zentrale, sphärische Gelenk definiert wird. Hierbei wird unter dem Begriff des sphärischen Gelenkes ein solches Gelenk verstanden, bei dem eine Drehung um einen definierten Punkt erfolgt, unabhängig davon, wie die Konstruktion des Gelenkes ist. Es kann sich somit beispielsweise um ein Kugelgelenk oder aber auch um ein kardanisches Gelenk handeln sowie auch andere Gelenkaufbauten, die sphärische Bewegungen um einen definierten Punkt ermöglichen.

Durch diese Konstruktion ergibt sich ein Aufbau, bei dem an der Aufnahmeplattform entsprechend der drei gewählten Freiheitsgrade drei Antriebe angreifen können, insbesondere die im mathematischen Sinne eine Basis bilden und deren jeweilige Wirkungslinie nicht durch das zentrale, beispielsweise kardanisch ausgelegte Gelenk verläuft. Es lässt sich so mit dieser Konstruktion um das zentrale Gelenk, zumindest innerhalb festgelegter Winkelbereiche, eine beliebige rotatorische Bewegung realisieren.

Die Konstruktion ist dabei derart ausgeführt, dass die Aufnahmeplattform über das zentrale Gelenk mit einem Antriebsgestell verbunden ist, an welchem wenigstens drei Antriebe, insbesondere drei jeweils hydraulische und bevorzugt linear arbeitende Antriebe angeordnet sind, die in einem Abstand vom zentralen Gelenk an der Aufnahmeplattform in Gelenken angreifen. Hierbei sind bevorzugt die jeweiligen Antriebe am Antriebsgestell ebenso in Gelenken befestigt.

Das zentrale Gelenk verbindet somit die Aufnahmeplattform mit dem Antriebsgestell, wobei die jeweiligen gewünschten Bewegungen über die drei Antriebe erzielt werden können. Diese Antriebe können beispielsweise, wie vorgenannt, als hydraulische Linearantriebe ausgebildet sein oder auch als Servomotoren, pneumatische Antriebe oder ähnliches. Insbesondere bei der Ausbildung als hydraulische Antriebe können diese als eine ansteuerbare Kolben-Zylinder-Anordnung realisiert sein, wobei hier bevorzugt die zylinderseitige Befestigung am Antriebsgestell und eine kolbenseitige Befestigung an der Aufnahmeplattform vorgesehen ist. Ebenso ist hier eine umgekehrte Anordnung grundsätzlich möglich.

Zur Realisierung eines besonders kompakten Aufbaus kann es dabei vorgesehen sein, dass an der Aufnahmeplattform (nur) zwei Angreifstellen/Gelenke für die (drei) Antriebe vorgesehen sind, wobei in einer gemeinsamen Angreifstelle bzw. einem gemeinsamen Gelenk zwei Antriebe angreifen. Es gibt somit bei dieser Ausführung seitens des Antriebsgestells drei Befestigungsorte zur Anbringung der Antriebe und seitens der Aufnahmeplattform zwei Befestigungsorte, wobei es vorgesehen sein kann, dass in einer bevorzugten Ausführung das zentrale Gelenk den Ursprung eines Koordinatensystems bildet, und die erfindungsgemäß vorgesehenen zwei Angreifstellen/Gelenke jeweils auf einer durch den gewählten Ursprung verlaufenden Koordinatenachse angeordnet sind.

So kann das gemeinsame Gelenk, an dem zwei Antriebe angreifen, zusammen mit dem Zentralgelenk, welches den Ursprung bildet, z.B. auf einer Achse in einer X-Richtung liegen, um die eine reine Verkippung durch einen dritten Antrieb möglich ist, der seine Angreifstelle bzw. Anlenkstelle auf einer durch das Zentralgelenk verlaufenden zur X-Achse bevorzugt senkrechten Y-Achse hat. Hierfür bedarf es lediglich der Ansteuerung dieses entsprechenden dritten Antriebs.

Eine Verkippung um die so definierte Y-Achse zwischen Zentralgelenk und der Anlenkstelle des dritten Antriebs kann durch eine Verlagerung der gemeinsamen Angreifstelle in der Höhe erfolgen, was durch eine gleichzeitige Ansteuerung der beiden, an dieser Stelle angreifenden weiteren Antriebe erfolgen kann. Hierfür kann es bevorzugt vorgesehen sein, dass die beiden Antriebe simultan und mit gleichen Schrittweiten bzw. gleichen Auslenkungen angesteuert werden.

Eine Rotation um eine Hochachse (Gierachse) in Z-Richtung, die im Wesentlichen senkrecht zu einer waagrecht ausgerichteten Aufnahmeplattform verläuft und bevorzugt senkrecht zu der Ebene steht, die durch die vorgenannten X- und Y-Achsen aufgespannt ist, kann dadurch erfolgen, dass alle drei Antriebe gleichzeitig betrieben werden. Dabei werden zwei der Antriebe, nämlich diejenigen, die an der gemeinsamen Angreifstelle an der Aufnahmeplattform angelenkt sind, im Wesentlichen, insbesondere näherungsweise gegensinnig verfahren, wobei gewährleistet sein muss, dass die Anlenkstelle des weiteren dritten Antriebs innerhalb der Ebene der Aufnahmeplattform verbleibt, wofür dieser eine Korrekturbewegung vollzieht, die im Wesentlichen die radiale Verkippung um die antriebsgestellseitige Anlenkstelle dieses Antriebs ausgleicht.

So ist durch eine Ansteuerung dieser drei Antriebe, wie z.B. hydraulische Antriebe, mittels eines dafür vorgesehenen Steuersystems eine zumindest in bestimmten Winkelbereichen beliebige Rotation um den durch das Zentralgelenk definierten Drehpunkt möglich.

Bezogen auf die beiden Antriebe, die an einem gemeinsamen Gelenk bzw. an der gemeinsamen Angreifstelle an der Aufnahmeplattform angelenkt sind, kann es vorgesehen sein, dass die durch diese beiden Antriebe aufgebrachten Kräfte, die z.B. bei einem hydraulischen Linearantrieb in Richtung einer Kolbenachse wirken, unter einem Winkel zueinander angeordnet sind, insbesondere unter einem Winkel von weniger als 90 Grad bezogen auf die waagerechte Lage der Aufnahmeplattform. Hier kann beispielsweise bevorzugt ein Winkel von 84 Grad in der waagerechten Lage gewählt sein. Dies hat den Vorteil, dass in sämtlichen Winkelbereichen bei einer Rotation um die vorbeschriebene Y-Achse die beiden Antriebe bzw. die Vektoren der durch sie erzeugten Kräfte eine ausreichend große Kraftkomponente in Z-Richtung bzw. bei beliebigen Lagen der Aufnahmeplattform senkrecht zu dieser erzeugen können.

Bei der erfindungsgemäßen Konstruktion ist es weiterhin vorgesehen, dass das zentrale Gelenk unterhalb der Aufnahmeplattformoberfläche angeordnet ist, insbesondere im Schwerpunkt oder aber auf einer senkrecht zur Ebene der Aufnahmeplattform orientierten Linie durch den Schwerpunkt.

Für die Bestimmung der Trägheitsparameter kann es in der Konstruktion weiterhin vorgesehen sein, dass jedes der Gelenke wenigstens einen Kraftsensor/Kraftaufnehmer umfasst, mit dem die im Gelenk wirkende Kraft, insbesondere die Gewichtskraft, messbar ist. Weiterhin kann es vorgesehen sein, dass zumindest das zentrale Gelenk wenigstens eine Winkelmessvorrichtung umfasst, mit der/denen Winkelbewegungen in allen drei Freiheitsgraden messbar sind. Beispielsweise kann das zentrale Gelenk, sofern es als kardanisches Gelenk ausgelegt ist, drei Winkelmessvorrichtungen umfassen, nämlich für jede der drei unabhängigen Achsen jeweils eine Winkelmessvorrichtung, mit der eine Winkelbewegung um die jeweils betroffene Achse messbar ist.

Es können somit bei der Durchführung eines Verfahrens zur Ermittlung der Trägheitsparameter die wesentlichen Größen, nämlich zum einen die bei der Rotation erzeugten Drehwinkel und zum anderen die hierbei jeweils wirkenden Kräfte messtechnisch erfasst und ausgewertet werden. Hierfür können die gemessenen Parameter, also die Winkel und die wirkenden Kräfte, in die verwendeten Bewegungsgleichungen, beispielsweise den Drallsatz, eingesetzt werden und es kann anhand der jeweils geltenden Randbedingung eine Auflösung zu der interessierenden Größe, also bezüglich der Trägheitsparameter, erfolgen.

Insbesondere bei der Ausbildung des zentralen Gelenkes als kardanisches Gelenk mit drei unabhängigen Drehachsen können die drei Kardanwinkel mittels der genannten Winkelmessvorrichtungen direkt gemessen werden. Es besteht hierbei weiterhin die Möglichkeit, auch die Zeitableitung dieser Größen zu bilden, wodurch Informationen über die Winkelgeschwindigkeit und auch die Winkelbeschleunigung erhalten werden, die in die Berechnung eingehen können.

Die weiterhin bei den ausgewählten Bewegungen wirkenden Kräfte und Momente, die beispielsweise durch die Schwere und die Trägheit des betrachteten Körpers, z.B. eines Kraftfahrzeugs, auftreten, können mit der erfindungsgemäßen Ausführung durch die jeweils in den Gelenken oder aber auch durch in den Antrieben, beispielsweise den Zylindern von hydraulischen Antrieben angeordneten Kraftsensoren/Kraftaufnehmer erfasst werden.

Eventuelle, hierbei auftretende Reibmomente in den Gelenken können dabei in erster Linie als vernachlässigbar betrachtet werden und stellen üblicherweise einen systematischen Fehler dar, der gegebenenfalls korrigierend berücksichtigt werden kann. Kräfte und wirkende Drehmomente, die gegebenenfalls durch Luftreibung des Prüfkörpers entstehen könnten, werden insbesondere dann als vernachlässigbar angesehen, wenn die eingestellten Winkelgeschwindigkeiten genügend klein sind. Insbesondere bei oszillierenden Bewegungen kleiner zwei Hertz, bevorzugt von ein Hertz oder weniger als ein Hertz, kann dieser Effekt vernachlässigt werden.

Zur Messung der wirkenden Kräfte innerhalb des gemeinsamen Gelenks bzw. der gemeinsamen Angreifstelle, an der zwei Antriebe gleichzeitig angelenkt sind, kann ein dreiaxialer Kraftsensor vorgesehen sein, um die jeweils wirkenden Kräfte in drei Raumrichtungen erfassen zu können.

In einer weiteren konstruktiven Ausgestaltung kann es vorgesehen sein, dass das zentrale Gelenk mittels einer Arretierungsvorrichtung arretierbar ist, insbesondere wobei eine Arretierung in der waagrechten Lage der Aufnahmeplattform vorgesehen sein kann. Dies ermöglicht, dass ein beliebiger Körper, wie beispielsweise ein Kraftfahrzeug, in der waagerechten Lage der Aufnahmeplattform zunächst auf dieser positioniert und befestigt werden kann, ohne dass hierbei eventuell wirkende Kräfte auf die Gelenke der Antriebe und die darin befindlichen Kraftsensoren einwirken. Gelenke und Kraftsensoren können so beispielsweise vor eventuellen Beschädigungen, die durch Stöße auftreten können, geschützt werden. Erst für die eigentliche Messphase kann die Arretierungsvorrichtung gelöst werden, so dass sodann die auf der Aufnahmeplattform befindliche Last sich auf die jeweiligen Anlenkstellen (Gelenke) und die daran angeordneten Antriebe verteilt.

Es kann hier weiterhin vorgesehen sein, dass ein Körper, dessen Trägheitsparameter ausgemessen werden sollen, nicht lose auf der Aufnahmeplattform aufliegt, sondern bevorzugt befestigt ist. Insbesondere bei einem Kraftfahrzeug kann es vorgesehen sein, eine oder mehrere feste Verbindungen zwischen der Aufnahmeplattform und dem bzw. den Kraftfahrzeugschwellern herzustellen. Es besteht so auch die Möglichkeit, ein auf der Aufnahmeplattform angeordnetes Kraftfahrzeug in einem definierten Einfederungszustand der Räder bzw. der daran angeordneten Dämpfer und Federn zu halten. So können bei einer Ausführung eines Messverfahrens bewegte schwingende Massen, die beispielsweise durch freihängende Räder gegeben wären, vermieden werden. Auch kann so ein Kraftfahrzeug in seiner üblichen Gebrauchsstellung vermessen werden.

Das vorgenannte gemeinsame Gelenk, in welchem zwei der insgesamt drei Antriebe seitens der Aufnahmeplattform angelenkt sind, kann derart ausgebildet sein, dass dieses koaxial zu seiner Drehachse (beispielsweise der X-Achse) ein der Aufnahmeplattform zugeordnetes Bauteil, eine der Antriebsseite zugeordnetes Gelenkteil und einen dazwischen angeordneten, diese Teile verbindenden Kraftsensor aufweist, wobei es vorgesehen sein kann, dass auf dem Gelenkteil zwei koaxial hintereinanderliegende Lagerschalen um die Drehachse drehbar gelagert sind, die jeweils mit einem der Antriebe verbunden sind. Hierbei kann es vorgesehen sein, dass der Kraftsensor die wirkenden Kräfte in drei Achsrichtungen messen kann.

Das zentrale Gelenk seinerseits kann eine Befestigungsplattform aufweisen, die im Wesentlichen mit der Aufnahmeplattform verbunden ist und zu bzw. in der koaxial um eine Hochachse drehbar eine erste Lagerplatte angeordnet ist. Diese Hochachse kann die Hoch- bzw. Gierachse (z.B. Z-Achse der beschriebenen Vorrichtung) bilden. Es kann hierbei vorgesehen sein, dass die erste Lagerplatte über einen Kraftaufnehmer mit einer zweiten Lagerplatte verbunden ist, wobei die zweite Lagerplatte um zwei Achsen senkrecht zur Hochachse kardanisch gelenkig mit dem Antriebsgestell verbunden ist. Es ergibt sich somit eine insgesamt über drei Achsen kardanische Lagerung, in die gleichzeitig ein Kraftaufnehmer integriert ist, insbesondere um die parallel zur Hochachse wirkenden Gewichtskräfte zu vermessen. Hierbei kann es besonders bevorzugt vorgesehen sein, dass sich die drei senkrecht zueinander orientierten Drehachsen des kardanisch ausgebildeten Gelenkes in einem gemeinsamen Punkt schneiden, der im Zentrum des Kraftaufnehmers angeordnet ist.

Hierbei kann diese Gelenkanordnung jeweils für jede der drei unabhängigen kardanischen Achsen einen eigenen Winkelsensor aufweisen.

Das Messverfahren kann derart durchgeführt werden, dass in einem Schritt, beispielsweise in einem ersten Schritt, der Körper statisch, insbesondere in der waagerechten Lage der Aufnahmeplattform, gehalten und in jedem der Gelenke die anteilige Gewichtskraft des Körpers gemessen wird. Es kann so beispielsweise die gesamte Gewichtskraft des Körpers ermittelt werden durch die Summierung der in den Gelenken gemessenen Kräfte. Unter Berücksichtigung der geltenden Erdbeschleunigung lässt sich sodann auf die Masse des Körpers rückschließen.

Bei dieser Situation vereinfacht sich die betrachtete Bewegungsgleichung (Drallsatz) beispielsweise durch die Randbedingungen, die durch den Ruhezustand gegeben sind, dass nämlich die aktuelle Winkelgeschwindigkeit sowie die Winkelbeschleunigung gleich Null ist. Es ergibt sich somit eine statische Kräftebilanzgleichung und der Gewichtskraftvektor ist durch die Summe der in den einzelnen Gelenkpunkten messbaren einzelnen Kraftvektoren bestimmbar.

Hierbei können einerseits die im Zentralgelenk wirkende Kraft durch die zuvor beschriebene, in diesem Zentralgelenk angeordnete Kraftmessvorrichtung erfasst werden. Zur Messung der in dem gemeinsamen Gelenk wirkenden Kraft kann der hier angeordnete, insbesondere dreiaxial ausgelegte Kraftsensor eingesetzt werden. Die Gelenkkraft, die an dem dritten Antrieb in dessen Anlenkstelle an der Aufnahmeplattform wirkt, kann entweder ebenso direkt gemessen oder aber durch die aufgewandte Aktuatorkraft bestimmt werden, die zur Einhaltung der waagerechten horizontalen Lage aktuell aufgebracht wird.

Es kann weiterhin insbesondere bezogen auf ein Koordinatensystem, in dessen Ursprung das zentrale Gelenk angeordnet ist, aus der Lage der Gelenke zueinander und der in jedem Gelenk gemessenen Gewichtskräfte die in die Ebene der Aufnahmeplattform projizierte Lage des Schwerpunktes des auf der Aufnahmeplattform befindlichen Körpers bestimmt werden. Die Lage der jeweiligen Gelenke ist hier durch das Koordinatensystem eindeutig bestimmt, da das zentrale Gelenk den Ursprung bildet und die beiden weiteren Angreifstellen bzw. Gelenkpositionen in einem vordefinierten Abstand exakt auf den beiden in der Plattformebene liegenden Koordinatenachsen angeordnet sind.

So wird aus der Kenntnis dieser Größen, die durch eine erste statische Messung ermittelt wurden, zumindest der Ort bestimmt, wo der Schwerpunktvektor in der Plattformebene angreift. Nach diesem Schritt bleibt jedoch hierbei bislang der Abstand des Schwerpunkte oberhalb der Plattformebene bzw. der Abstand zum Ursprung des Koordinatensystems und somit die Richtung und Länge des Schwerpunktvektors unbekannt.

Diese unbekannte Größe kann beispielsweise dadurch ermittelt werden, dass die Aufnahmeplattform in einem vorgegebenen Winkelbereich in wenigstens einem der Freiheitsgrade aus der waagerechten Lage verkippt wird. Es kann sich somit um eine Verkippung entweder um die X- oder die Y-Achse bevorzugterweise handeln. Hierbei wird während der Verkippung, die bevorzugterweise quasi statisch erfolgt, d.h. mit langsamen Winkelgeschwindigkeiten zu den jeweils gemessenen Winkeln erneut die Schwerpunktlage in der Plattformebene bestimmt werden, wie es vorgenannt beschrieben wurde. Es kann so aus dem winkelabhängigen Wandern des Schwerpunktes innerhalb der Aufnahmeplattformebene die Höhe des Schwerpunktes über der Aufnahmeplattform und die Lage zum Ursprung bestimmt werden. Somit ist sodann der Schwerpunktvektor insgesamt bekannt.

Für das weitere Verfahren zur Ermittlung der Trägheitsparameter kann sodann in Kenntnis der Schwerpunktlage die Aufnahmeplattform um die drei Achsen, insbesondere sukzessive nacheinander und insbesondere oszillierend jeweils in einem vorgegebenen Winkelbereich von beispielsweise plus minus 5 Grad verdreht werden, wobei in jedem der Gelenke die wirkenden Kräfte erfasst und im zentralen Gelenk der bzw. die Winkel erfasst werden, wobei sodann aus diesen gemessenen Größen in Kenntnis der vorangehend bestimmten Masse und Schwerpunktlage sowie der gegebenen Randbedingungen die Trägheitsparameter, nämlich hier insbesondere die Trägheitsmatrix, mit den Hauptträgheitsmomenten bezüglich der jeweiligen Achsen und den Deviationsmomenten bestimmt werden.

Ein Ausführungsbeispiel der Erfindung ist in den nachfolgenden Figuren näher beschrieben. Es zeigen:
- Figur 1: eine vereinfachte Darstellung der erfindungsgemäßen Vorrichtung
- Figur 2: eine perspektivische Darstellung einer konkreten Messvorrichtung
- Figur 3: eine Seitenansicht einer erfindungsgemäßen Messvorrichtung
- Figur 4: das zentrale Gelenk in perspektivischer Ansicht
- Figur 5a: eine erste seitliche Schnittansicht des zentralen Drehgelenks
- Figur 5b: eine zweite Schnittansicht des zentralen Drehgelenks
- Figur 6: eine seitliche Ansicht auf das gemeinsame Gelenk zweier Antriebe
- Figur 7: eine Schnittansicht parallel zur Drehachse des Drehgelenks
- Figur 8: ein Flussdiagramm des Messverfahrens
- Figur 9:: die mathematische Gleichung des eingesetzten Drallsatzes mit Erläuterungen
- Figur 10:: Eine Beschreibung der 10 Trägheitsparameter

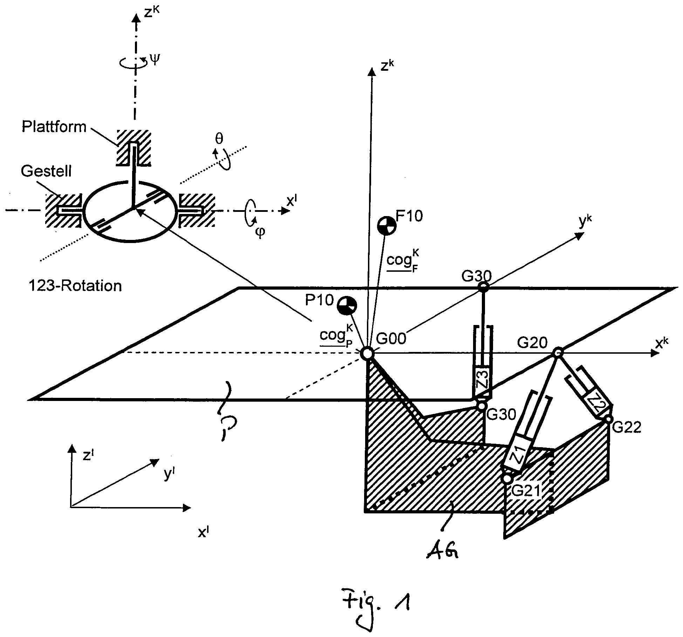

Die Figur 1 zeigt eine schematische Darstellung der erfindungsgemäßen Vorrichtung. Erkennbar ist hier eine Aufnahmeplattform P, die zur Aufnahme eines beliebigen Körpers, beispielsweise eines Kraftfahrzeugs, dient und mit dem darunter angeordneten Antriebsgestell AG über das zentrale Gelenk G00 verbunden ist. Dieses zentrale Gelenk kann z.B. ein kardanisches Gelenk mit drei Achsen aufweisen, die sich in einem gemeinsamen Punkt schneiden, so dass hierdurch eine sphärische Bewegung der Aufnahmeplattform P um das zentrale Gelenk möglich ist.

Die Bewegungsgleichungen, die zur Bestimmung der Trägheitsparameter anhand eines Messverfahrens zum Einsatz kommen, wie beispielsweise anhand des Drallsatzes, nutzen zur Beschreibung der räumlichen Bewegung zwei Punkte. Es handelt sich hierbei um den Schwerpunkt F10 eines auf der Aufnahmeplattform abgestellten angenommenen Fahrzeugs sowie um einen Referenzpunkt P10 der Aufnahmeplattform. Hierbei kann es sich im Wesentlichen um den Schwerpunkt der Aufnahmeplattform handeln. Dieser kann bevorzugt innerhalb des Zentralgelenks angeordnet sein.

Zur Durchführung eines Messverfahrens und zur Verwendung der Bewegungsgleichungen können bevorzugt und zur Vereinfachung dieser Bewegungsgleichungen Randbedingungen angenommen werden, wie beispielsweise, dass Kräfte, die durch den Luftwiderstand als äußere Kräfte an dem zu prüfenden Körper angreifen, als vernachlässigbar klein angenommen werden.

Ebenfalls kann es angenommen werden, dass die Reibung in den Gelenken bzw. zwischen den einzelnen Gelenkgliedern vernachlässigbar ist. Es kann weiterhin angenommen werden, dass die einzelnen Getriebeglieder der erfindungsgemäßen Vorrichtung ideal steif sind, dass es also insbesondere keinen Schlupf und keine Hysteresen gibt.

Der zu prüfende Körper, wie beispielsweise ein Kraftfahrzeug, kann als Starrkörper angenommen werden. Dies kann bezogen auf ein Kraftfahrzeug hier bei dieser Vorrichtung insbesondere dadurch erreicht werden, dass das Fahrzeug auf der Aufnahmevorrichtung derart befestigt wird, dass eine Relativbewegung zwischen den Rädern und der erfindungsgemäßen Vorrichtung unterbunden wird. Das Kraftfahrzeug kann somit in einem bestimmten Einfederungszustand der Räder auf der Plattform fixiert werden.

Durch geeignet gewählte Bewegungsabläufe, wie beispielsweise oszillierendes Hin- und Herbewegen um eine oder mehrere Achsen, insbesondere sukzessive nacheinander, können die gemessenen Winkel und Kräfte sowie die ermittelte Masse in die Bewegungsgleichungen eingesetzt und diese nach den gewünschten Trägheitsparametern aufgelöst werden. Hierbei wird es bevorzugt vorgesehen sein, dass die Antriebe, die hier hydraulisch ausgeführt sein können, etwa quasi stationäre Bewegungsabläufe vollziehen, so dass gerade bei oszillierenden Bewegungen Frequenzen von ca. ein Hertz vollzogen werden. Es können mit der vorgenannten Vorrichtung jedoch auch hochdynamische Bewegungsabläufe mit deutlich höheren Oszillationen oder auch geringere Frequenzen gefahren werden.

In der Figur 1 sind die einzelnen Gelenkpunkte, die das Antriebsgestell AG mit der Aufnahmeplattform bzw. die Antriebsplattform AG mit den Antrieben und diese mit der Aufnahmeplattform verbinden, mit den Buchstaben G bezeichnet, wobei die weitere Ziffernkombination die jeweilige Position des Gelenkes angibt. Wie vorangehend beschrieben, sind die jeweiligen Gelenkpositionen, insbesondere G00, G20 und G30 wie im allgemeinen Teil beschrieben, ausgeführt.

Hierbei wird eine Verkippung um die körperfeste X-Achse, d.h. diejenige, die durch die Achse G00-G20 definiert ist, durch eine Ansteuerung des Antriebs Z3 bewirkt, der sich zwischen den Anlenkstellen G30 befindet. Eine Verkippung um die Y-Achse hingegen wird durch eine gleichzeitige und insbesondere mit gleicher Bewegungsweiteansteuerung der Antriebe Z1 und Z2 erreicht, so dass die gemeinsame Anlenkstelle G20 um den Ursprung G00 bezüglich der Achse G00-G30 rotiert.

Soll hier eine Rotation um die Hochachse Z erreicht werden, so werden alle Antriebe Z1, Z2 und Z3 gleichzeitig angesteuert, wobei die Ansteuerung von Z1 und Z2 im Wesentlichen gegensinnig erfolgt, d.h. für eine Drehung entgegen dem Uhrzeigersinn wird Z1 ausgefahren und Z2 eingefahren, wobei gleichzeitig eine Kompensation der Länge des Antriebs Z3 derart erfolgt, dass der Gelenkpunkt G30 weiterhin in derselben Ebene verbleibt. Es erfolgt hier also im Wesentlichen eine Radiuskorrektur des um den an dem Aritriebsgestell gelenkig befestigten Antrieb Z3.

Zur Beschreibung der Bewegungsgleichungen werden bei dieser Vorrichtungen zwei Koordinatensysteme eingesetzt. Zum einen ein körperfestes Koordinatensystem mit dem Ursprung im zentralen Gelenk G00 sowie ein Inertialsystem. Diese Koordinatensysteme verlaufen in der Ausgangsstellung der Plattform, d.h. in der waagerechten Ausrichtung und der jeweiligen Nullstellung der drei möglichen Winkel parallel zueinander.

Die drei möglichen Rotationsachsen schneiden sich im Punkt G00 des Kardangelenkes, wobei die Anordnung dieser Achsen einer 123-Konfiguration entspricht. Die hier in der Figur 1 dargestellte erfindungsgemäße Vorrichtung erlaubt demnach ein in drei Freiheitsgraden mögliche Rotation mittels der drei Antriebe Z1, Z2 und Z3 um den Ursprung im zentralen Gelenk G00.

Somit ergibt sich die Möglichkeit, einzelne Bewegungsabläufe verschiedenster Art durchzuführen, ohne den zu prüfenden Körper, wie beispielsweise ein Kraftfahrzeug zwischen den einzelnen Bewegungsarten, umzuspannen. Hierbei bedarf es keiner Rotation um eine der Achsen bezüglich des Vollwinkels von 360 Grad, sondern sämtliche Messungen können auch, insbesondere durch oszillierendes Hin- und Herbewegen um eine Achse, beispielsweise in einem Winkelbereich von plus minus 25 Grad oder weniger durchgeführt werden.

Die Durchführung der Messungen, beispielsweise der Masse, der Lage des Schwerpunktes und der Bestimmung des Trägheitstensors erfolgt dabei wie in dem allgemeinen Teil der Beschreibung näher erläutert durch eine zunächst erfolgende Feststellung der Masse, dann anhand der Positionierung der Antriebsgelenkstellen die Bestimmung der Lage des Schwerpunktes bezogen auf die Ebene der Aufnahmeplattform und anschließend die Bestimmung der Höhe des Schwerpunktes über der Aufnahmeplattform anhand einer Verkippung unter jeweiliger Neufeststellung der Schwerpunktlage in der Ebene. Mit den Größen, die durch die Masse und durch den Schwerpunktvektor gegeben sind, kann sodann der Trägheitstensor bestimmt werden durch Auflösung der entsprechenden Bewegungsgleichungen in Kenntnis der Randbedingungen und der gegebenen Größen.

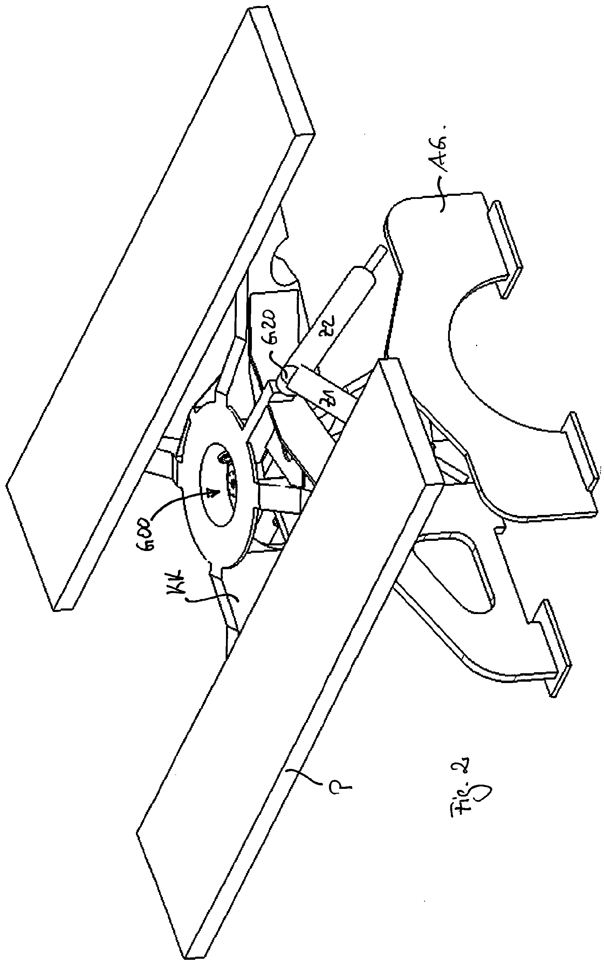

Die Figur 2 zeigt in der perspektivischen Übersichtsdarstellung die konkrete konstruktive Ausgestaltung der erfindungsgemäßen Vorrichtung. Erkennbar ist hier eine Aufnahmeplattform P, die hier im Wesentlichen durch zwei parallele, etwa in der Spurbreite eines Fahrzeugs beabstandete Aufnahmeflächen gegeben ist, die untereinander durch eine Kreuzkonstruktion KK verbunden sind, in deren Mitte das zentrale Gelenk G00 angeordnet ist. Erkennbar ist hier weiterhin ein unter der Plattform P angeordnetes Aufnahmegestell AG, an dem im Wesentlichen an einer der Stirnseiten des Aufnahmegestells die beiden Antriebe Z1 und Z2 beabstandet angelenkt sind und eine gemeinsame Anlenkstelle G20 an der Aufnahmeplattform P aufweisen. Der weitere Antrieb Z3 ist in dieser Darstellung nicht erkennbar.

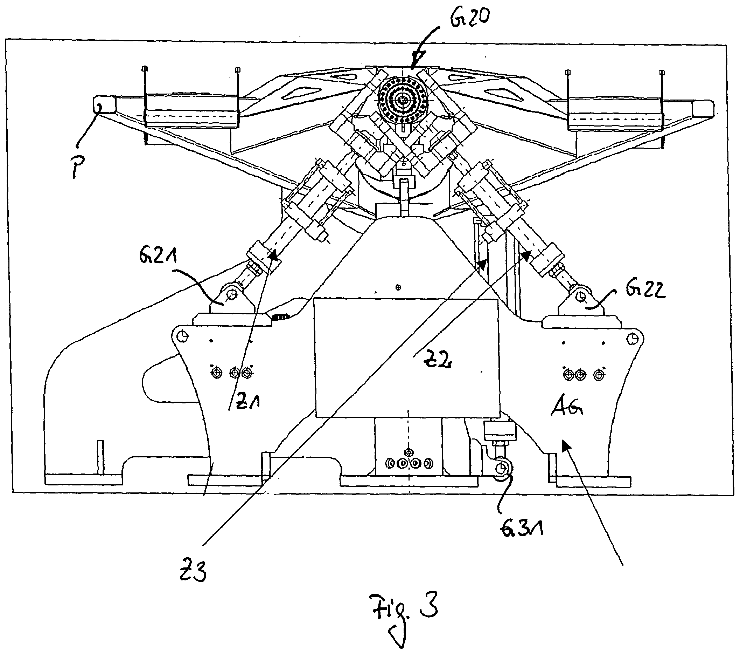

Die Figur 3 zeigt eine seitliche Darstellung auf die erfindungsgemäße Vorrichtung, in der die Stirnseite des Antriebsgestells AG sowie die Anlenkstellen G21 und G22 der Antriebe Z1 und Z2 erkennbar sind. Die beiden Achsen der Antriebe Z1 und Z2 verlaufen hier in einem Winkel von weniger als 90 Grad zueinander bezogen auf die hier dargestellte horizontale Lage der Aufnahmeplattform, insbesondere unter 84 Grad. Weiterhin ist erkennbar, dass die beiden Antriebe Z1 und Z2 in dem gemeinsamen Gelenk G20 an der Aufnahmeplattform P angreifen.

Verdeckt durch die Stirnseite des Antriebsgestells AG ist hier weiterhin der Antrieb Z3 zu erkennen, der sich in der waagerechten Lage der Aufnahmeplattform im Wesentlichen vertikal zwischen dem Antriebsgestell AG und der Aufnahmeplattform P erstreckt. Erkennbar ist an der Aufnahmeplattform die untere Anlenkstelle G31.

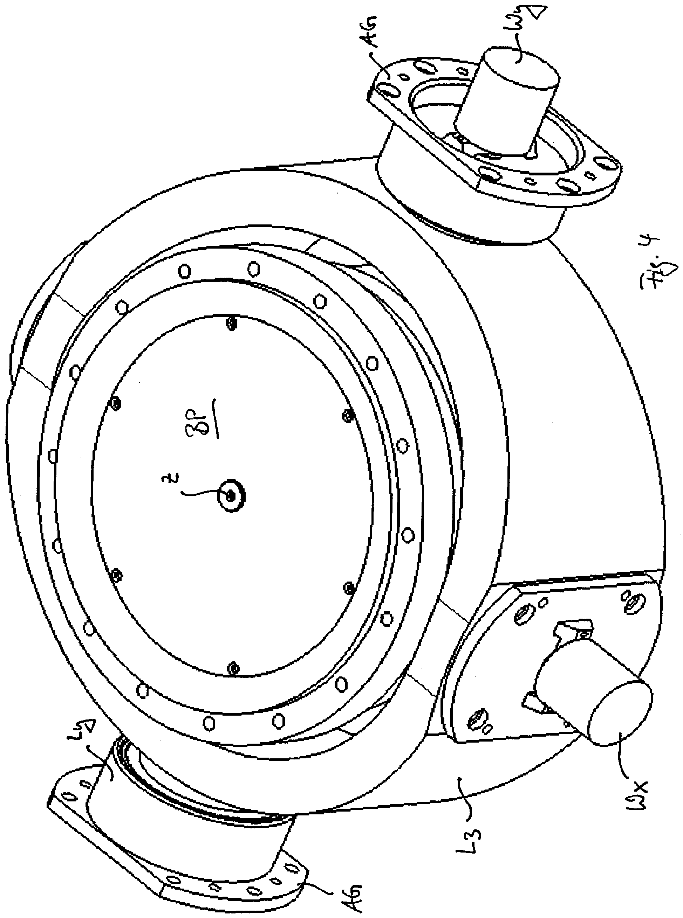

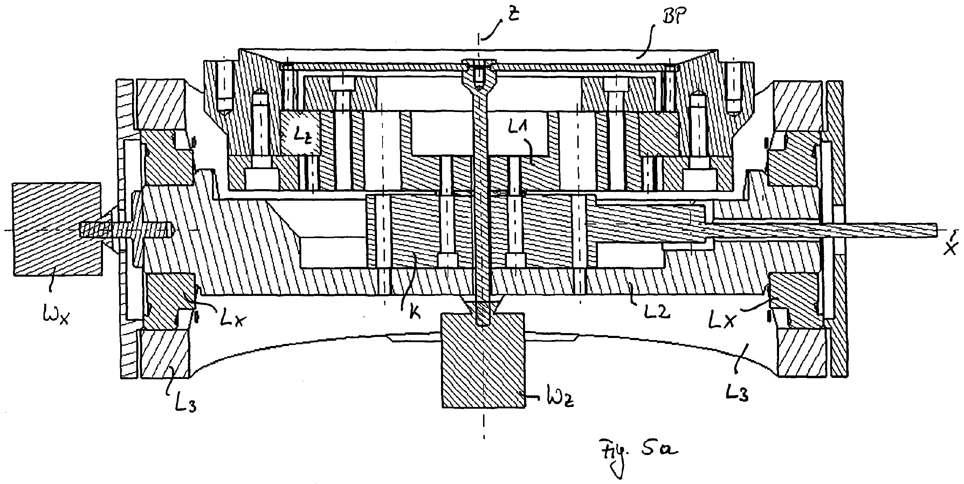

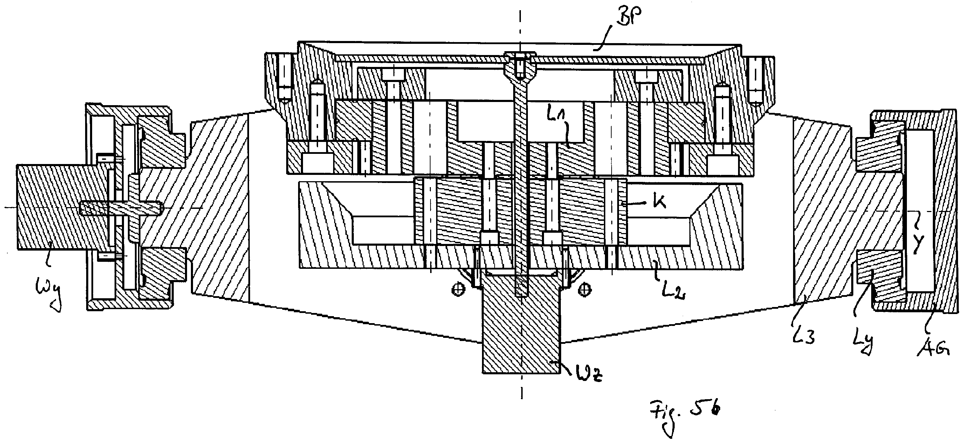

Die Figur 4 zeigt in einer perspektivischen Übersichtsdarstellung den Aufbau des zentralen Gelenks, welches in zwei Schnittzeichnungen in den Figuren 5a und 5b näher erläutert ist.

Bezugnehmend auf die Figuren 5a und 5b ist hier eine Befestigungsplattform BP zu erkennen, die um eine erste Lagerplatte L1 um die Hochachse Z aufgrund des koaxial zwischen diesen Bauteilen angeordneten Lagers LZ drehbar ist. Hierbei ist in dieser Ausführung die erste Lagerplatte L1 im Wesentlichen koaxial zur Hochachse Z innerhalb der Befestigungsplattform BP angeordnet. An der Lagerplatte L1 ist ein Kraftsensor K befestigt, der eine Verbindung zu einer zweiten Lagerplatte L2 herstellt, so dass in Z-Richtung wirkende Kräfte zwischen der Befestigungsplattform BP und der zweiten Lagerplatte L2 messtechnisch erfasst werden können. Erkennbar ist hier, dass die Lagerplatte L2 um eine erste, hier im Wesentlichen waagerecht ausgerichtete Drehachse X in der Lageranordnung LX rotierbar ist, wobei das Lager LX eine Verbindung zwischen der zweiten Lagerplatte L2 und einem dritten Teil L3 herstellt, welches mit Bezug auf die Figur 5 durch eine Lageranordnung LY um eine weitere Achse in Y-Richtung drehbar ist. Über das Lager LY erfolgt eine Verbindung zum Antriebsgestell AG entweder direkt oder über ein Zwischenbauteil.

Es ergibt sich so ein insgesamt kardanischer Aufbau um die Drehachsen X, Y und Z, wobei sich in dieser Ausführung sämtliche Drehachsen in einem gemeinsamen Punkt schneiden, der zentral innerhalb des Kraftsensors K angeordnet ist.

Jede der drei Achsen ist weiterhin noch mit einem Winkelsensor WZ, WX bzw. WY versehen, um die jeweiligen Drehwinkel dieser Achsen erfassen zu können.

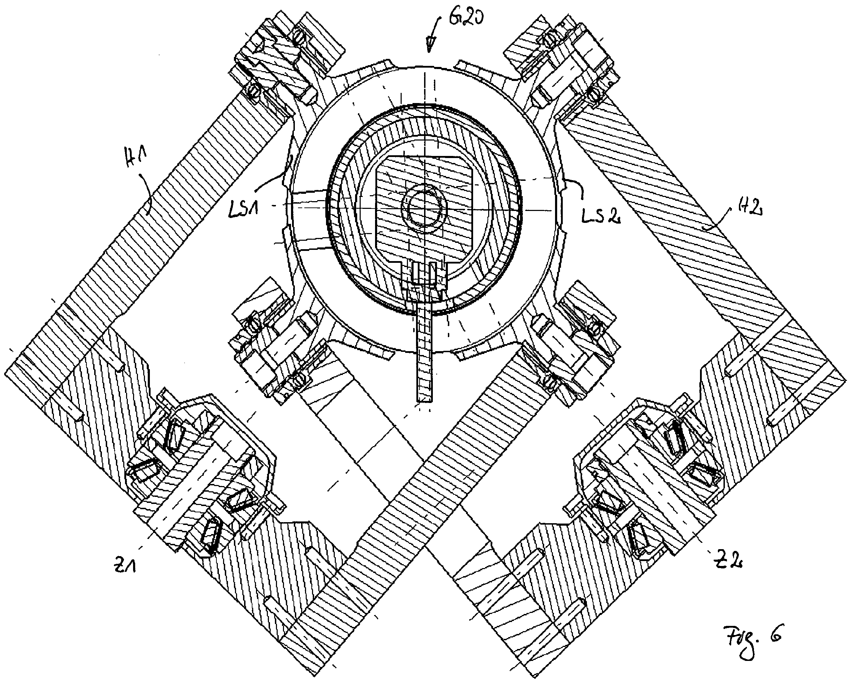

Die Figur 6 zeigt in einer seitlichen Aufsicht auf die Drehachse das gemeinsame Drehgelenk G20, wobei hier zur Verbesserung der Übersichtlichkeit die Antriebskolben der beiden Antriebe Z1 und Z2 nicht dargestellt werden. An den Enden der beiden Antriebe Z1 und Z2 sind jeweils Haltebügel H1 und H2 angeordnet, die zu zwei einander gegenüberliegenden Seiten an in der Figur 6 nicht erkennbaren Lagerschalen LS1 und LS2 angreifen, insbesondere deren Bügel sich teilweise durchdringen.

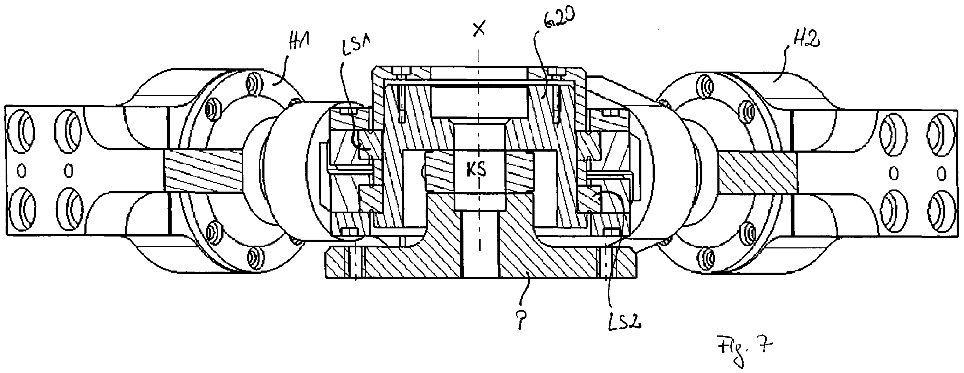

Zentral und koaxial um die Drehachse ist hier ein Kraftsensor KS angeordnet, der in drei Achsen die wirkenden Kräfte messen kann. Erkennbar ist in der Schnittdarstellung der Figur 7, dass die Halter H1 bzw. H2 jeweils an in axialer Richtung hintereinander angeordneten Lagerschalen LS1 und LS2 angreifen. Die Lagerschalen sind dabei koaxial um ein der Antriebsseite zugeordnetes Gelenkteil G20 angeordnet, welches über den Kraftsensor KS, der ebenfalls koaxial zur Drehachse X angeordnet ist, mit einem Bauteil verbunden ist, welches der Aufnahmeplattform P zugeordnet ist. So ergibt sich in dem gemeinsamen Gelenk G20 eine gelenkige Verbindung, in der gleichzeitig in drei Achsen die jeweils wirkenden Kräfte erfassbar sind.

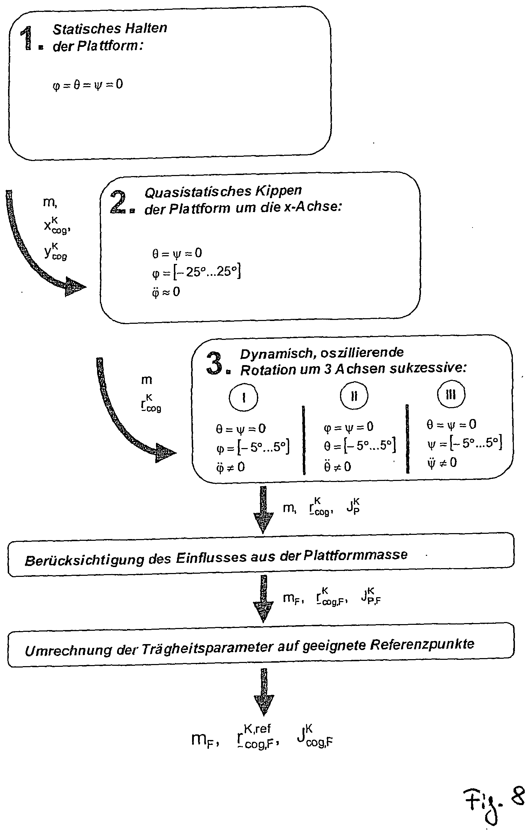

Die Figur 8 zeigt in der Übersicht das Messverfahren. In einem ersten Schritt wird unter Nullstellung der Drehwinkel, d.h. einer horizontalen waagerechten Ausrichtung der Aufnahmeplattform, zunächst die Masse M durch Kraftmessung in den drei Gelenkstellen ermittelt sowie weiterhin aus der Position der Gelenkstellen die Lage des Schwerpunktes in X- bzw. Y-Richtung innerhalb der Ebene der Aufnahmeplattform. Es wird sodann in einem Winkelbereich von plus minus 25 Grad um eine der Achsen ein quasi statisches Kippen, hier um die X-Achse, durchgeführt, wobei jeweils wieder die Lage des Schwerpunktes in der Ebene der Aufnahmeplattform ermittelt und aus dem Wandern dieser Lage auf die Höhe des Schwerpunktes oberhalb der Aufnahmeplattform beschlossen, so dass sich hierdurch der Schwerpunktvektor ergibt. In Kenntnis der Masse und des Schwerpunktvektors kann sodann in einem dritten Schritt durch ein dynamisches oszillierendes Rotieren um drei Achsen, bevorzugt sukzessive nacheinander, in Winkelbereichen von jeweils z.B. etwa plus minus 5 Grad der Trägheitstensor ausgemessen werden. Hierbei können unter Berücksichtigung des Einflusses aus der Plattformmasse die Masse des ausgemessenen Körpers der Schwerpunkt-und der Trägheitstensor bestimmt werden.

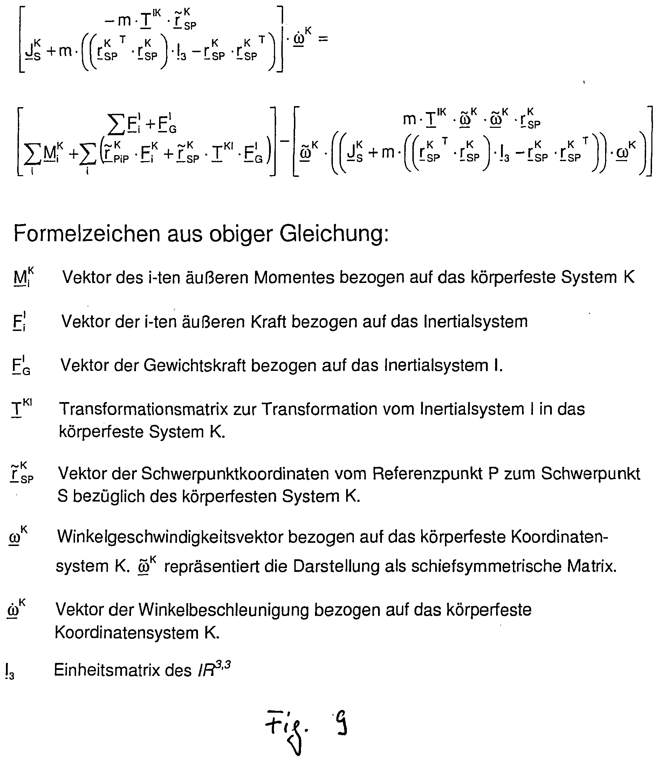

Die Figur 9 zeigt in der Übersicht die verwendete mathematische Gleichung zur Beschreibung der Bewegung mit entsprechender Erläuterung der verwendeten Variablen bzw. Vektoren / Tensoren. Je nach den Randbedingen, die bei den durchgeführten Bewegungen im Rahmen des erfindungsgemäßen Verfahren vollzogen werden vereinfacht sich dieser hier gezeigte Zusammenhang. Mit den gemessenen Größen, wie Winkel, Kräfte und deren einfache oder zweifache Ableitungen kann die Gleichung aufgelöst werden zu den gesuchten Trägheitsparametern.

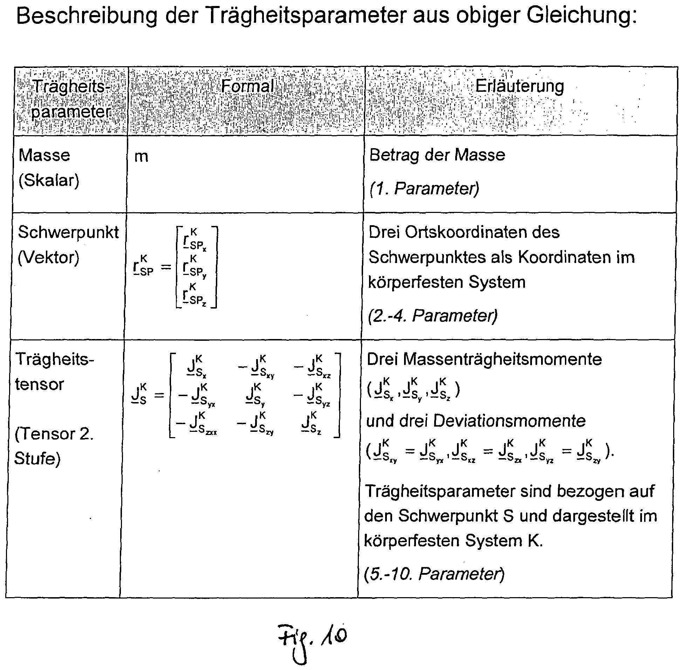

Die Trägheitsparameter, die Im Rahmen dieser Erfindung ermittelt werden sind ergänzend nochmals in der Figur 10 erläutert.

Es ist somit ersichtlich, dass mit der erfindungsgemäßen Vorrichtung auf einfache Art und Weise, insbesondere mit einem konstruktiv einfachen, rotatorisch arbeitenden Aufbau sowie mit einem einfachen Messverfahren unter Zugrundelegung der Bewegungsgleichung, wie sie durch den Drallsatz gegeben sind, die wesentlichen Trägheitsparameter eines beliebigen Körpers ausgemessen werden können. Es können so die Trägheitsparameter unbekannter Körper ausgemessen oder die Trägheitsparameter bekannter Körper verifiziert bzw. überprüft werden.

## Patentansprüche

1. Vorrichtung zur Bestimmung der Trägheitsparameter eines Körpers, die eine Aufnahmeplattform (P) umfasst, auf welcher der Körper (F10) positionierbar ist und die ein zentrales, sphärisches Gelenk (G00) aufweist, um welches die Aufnahmeplattform (P) bewegbar ist und das zentrale sphärische Gelenk (G00) unterhalb der Aufnahmeplattformoberfläche (P) angeordnet ist, **dadurch gekennzeichnet, dass** die Aufnahmeplattform (P) mittels Antrieben (Z1, Z2, Z3) in drei Freiheitsgraden (x,y,z) bewegbar ist, wobei die Aufnahmeplattform (P) über das zentrale Gelenk (G00) mit einem Antriebsgestell (AG) verbunden ist, an welchem wenigstens drei Antriebe (Z1, Z2, Z3) angeordnet sind, die in einem Abstand vom zentralen Gelenk (G00) an der Aufnahmeplattform (P) in Gelenken (G20, G30) angreifen.

2. Vorrichtung nach Anspruch 1, **dadurch gekennzeichnet, dass** an der Aufnahmeplattform (P) zwei Angreifstellen/Gelenke (G20, G30) für die Antriebe (Z1, Z2, Z3) vorgesehen sind, wobei in einer gemeinsamen Angreifstelle/einem gemeinsamen Gelenk (G20) zwei Antriebe (Z1, Z2) angreifen.

3. Vorrichtung nach Anspruch 2, **dadurch gekennzeichnet, dass** die Kräfte, die durch die beiden Antriebe (Z1, Z2) an dem gemeinsamen Gelenk (G20) an der Aufnahmeplattform (P) angreifen, unter einem Winkel von weniger als 90 Grad in der waagerechten Lage der Aufnahmeplattform (P) zueinander orientiert sind.

4. Vorrichtung nach einem der vorherigen Ansprüche, **dadurch gekennzeichnet, dass** jedes der Gelenke (G00, G20, G30) oder jeder der Antriebe (Z1, Z2, Z3) wenigstens einen Kraftsensor (K, KS) umfasst, mit dem die im Gelenk (G00, G20) wirkende Kraft.

5. Vorrichtung nach einem der vorherigen Ansprüche, **dadurch gekennzeichnet, dass** das zentrale Gelenk (G00) wenigstens eine Winkelmessvorrichtung (Wx, Wy, Wz) umfasst, mit der/denen Winkelbewegungen in allen drei Freiheitsgraden (x,y,z) messbar sind.

6. Vorrichtung nach einem der vorherigen Ansprüche, **dadurch gekennzeichnet, dass** das zentrale Gelenk (G00) mittels einer Arretierungsvorrichtung arretierbar ist.

7. Vorrichtung nach einem der vorherigen Ansprüche, **dadurch gekennzeichnet, dass** der Körper (F10) ein Kraftfahrzeug ist und eine feste Verbindung zwischen der Aufnahmeplattform (P) und einem Kraftfahrzeugschweller des Kraftfahrzeugs herstellbar ist, die in der Lage ist das Fahrzeug in definierten Einfederzuständen zu halten.

8. Vorrichtung nach einem der vorherigen Ansprüche 2 bis 7, **dadurch gekennzeichnet, dass** das gemeinsame Gelenk (G20) koaxial zur Drehachse (x), auf welcher das gemeinsame Gelenk (G20) und das zentrale Gelenk (G00) liegen, ein der Aufnahmeplattform (P) zugeordnetes Bauteil, ein der Antriebsseite zugeordnetes Gelenkteil und einen dazwischen angeordneten diese Teile verbindenden Kraftsensor (KS) aufweist, wobei auf dem Gelenkteil (G20) zwei koaxial hintereinander liegende Lagerschalen (LS1, LS2) um die Drehachse (x) drehbar gelagert sind, die jeweils mit einem der Antriebe (Z1, Z2) verbunden sind.

9. Vorrichtung nach einem der vorherigen Ansprüche, **dadurch gekennzeichnet, dass** das zentrale Gelenk (G00) eine Befestigungsplattform (BP) aufweist zu/in der koaxial um eine vertikale Hochachse (z) drehbar eine erste Lagerplatte (L1) angeordnet ist, die über einen Kraftaufnehmer (K) mit einer zweiten Lagerplatte (L2) verbunden ist, wobei die zweite Lagerplatte (L2) um zwei Drehachsen (x,y) senkrecht zur Hochachse (z) kardanisch gelenkig mit dem Antriebsgestell (AG) verbunden/verbindbar ist.

10. Vorrichtung nach Anspruch 8 und 9, **dadurch gekennzeichnet, dass** sich die drei senkrecht zueinander orientierten Drehachsen (x,y,z) in einem gemeinsamen Punkt im Zentrum des Kraftaufnehmers (K) schneiden.

11. Vorrichtung nach Anspruch 9 oder 10, **dadurch gekennzeichnet, dass** jeder der drei Achsen (x,y,z) des zentralen Gelenks (G00) ein eigener Winkelsensor (Wx, Wy, Wz) zugeordnet ist.

12. Verfahren zur Ermittlung der Trägheitsparameter eines Körpers mittels einer Vorrichtung nach einem der vorherigen Ansprüche, **dadurch gekennzeichnet, dass** ein Steuersystem vorgesehen ist, mittels dem die Aufnahmeplattform (P) und ein darauf befestigter Körper (F10) um den zentralen Drehpunkt (G00) in drei Freiheitsgraden (x,y,z) bewegt wird, wobei die in den Gelenken (G00, G20) gemessenen Kräfte und die im zentralen Gelenk (G00) gemessenen Winkel einer Auswertung zugeführt werden, mit der die Trägheitsparameter des Körpers (F10) bestimmt werden.

13. Verfahren nach Anspruch 12, **dadurch gekennzeichnet, dass** in einem Schritt der Körper statisch gehalten und in jedem der Gelenke (G00, G20, G30) und/oder der Antriebe (Z1, Z2, Z3) die anteilige Gewichtskraft des Körpers gemessen wird, wobei die gesamte Gewichtskraft des Körpers ermittelt wird durch die Summierung der in den Gelenken (G00, G20, G30) und/oder Antrieben (Z1, Z2, Z3) gemessenen Kräfte.

14. Verfahren nach einem der Ansprüche 12 oder 13, **dadurch gekennzeichnet, dass** bezogen auf ein Koordinatensystem in dessen Ursprung das zentrale Gelenk (G00) angeordnet ist, aus der Lage der Gelenke (G00, G20, G30) zueinander und der den Gelenken (G00, G20, G30) und/oder den Antrieben (Z1, Z2, Z3) gemessenen Gewichtskräfte die in die Ebene der Aufnahmeplattform (P) projizierte Lage (cog_{P}^{K}) des Schwerpunktes (cog_{F}^{K}) des Körpers (F10) bestimmt wird.

15. Verfahren nach Anspruch 14, **dadurch gekennzeichnet, dass** die Aufnahmeplattform (P) in einem vorgegebenen Winkelbereich in wenigstens einem der Freiheitsgrade (x,y,z) aus der waagerechten Lage verkippt wird, wobei während der Verkippung zu gemessenen Winkeln erneut die Schwerpunktlage (cog_{P}^{K}) in der Plattformebene (P) bestimmt und aus dem winkelabhängigen Wandern des Schwerpunktes (cog_{P}^{K}) die Höhe und/oder Lage des Schwerpunktes (cog_{F}^{K}) über der Aufnahmeplattform (P) bestimmt wird.

16. Verfahren nach einem der Ansprüche 12 bis 15, **dadurch gekennzeichnet, dass** in Kenntnis der Schwerpunktlage (cog_{F}^{K}) die Aufnahmeplattform (P) um die drei Achsen (x,y,z) jeweils in einem vorgegebenen Winkelbereich verdreht wird, wobei in den Gelenken (G00, G20, G30) und/oder den Antrieben (Z1, Z2, Z3) die wirkenden Kräfte erfasst und im zentralen Gelenk (G00) der Winkel erfasst wird und aus den gemessenen Größen die Trägheitsparameter bestimmt werden.

## Claims

1. Device for determining the inertial parameters of a body, which comprises a holding platform (P) on which the body (F10) can be positioned and which has a central spherical joint (G00) about which the holding platform (P) can be moved, and the central spherical joint (G00) is arranged underneath the holding platform surface (P), **characterized in that**
the holding platform (P) can be moved in three degrees of freedom (z, y, z) by means of drives (Z1, Z2, Z3), the holding platform (P) being connected via the central joint (G00) to a drive frame (AG) on which there are arranged at least three drives (Z1, Z2, Z3), which act on the holding platform (P) in joints (G20, G30) at a distance from the central joint (G00).

2. Device according to Claim 1, **characterized in that** two action points/joints (G20, G30) for the drives (Z1, Z2, Z3) are provided on the holding platform (P), two drives (Z1, Z2) acting in a common action point/a common joint (G20).

3. Device according to Claim 2, **characterized in that** the forces which act on the holding platform (P) at the common joint (G20) as a result of the two drives (Z1, Z2) are oriented in relation to each other at an angle of less than 90 degrees in the horizontal position of the holding platform (P).

4. Device according to one of the preceding claims, **characterized in that** each of the joints (G00, G20, G30) or each of the drives (Z1, Z2, Z3) comprises at least one force sensor (K, KS) with which the force acting in the joint (G00, G20).

5. Device according to one of the preceding claims, **characterized in that** the central joint (G00) comprises at least one angle measuring device (Wx, Wy, Wz), with which angular movements in all three degrees of freedom (x, y, z) can be measured.

6. Device according to one of the preceding claims, **characterized in that** the central joint (G00) can be locked by means of a locking device.

7. Device according to one of the preceding claims, **characterized in that** the body (F10) is a motor vehicle, and a fixed connection can be produced between the holding platform (P) and a motor vehicle sillboard of the motor vehicle, which is capable of holding the vehicle in defined spring travel positions.

8. Device according to one of the preceding Claims 2 to 7, **characterized in that** the common joint (G20) coaxially with respect to the axis of rotation (x) on which the common joint (G20) and the central joint (G00) are located has a component assigned to the holding platform (P), a joint part assigned to the drive side and a force sensor (KS) arranged between and connecting these parts, two bearing shells (LS1,LS2) located coaxially one behind the other being mounted on the joint part (G20) such that they can rotate about the axis of rotation (x) and are each connected to one of the drives (Z1, Z2).

9. Device according to one of the preceding claims, **characterized in that** the central joint (G00) has a securing platform (BP) to/in which a first bearing plate (L1) is arranged so that it can rotate coaxially about a vertical axis (z), said first bearing plate being connected via a force transducer (K) to a second bearing plate (L2), where the second bearing plate (L2) is/can be connected, cardanically and in an articulated manner to the drive frame (AG) about two axes of rotation (x, y) perpendicular to the vertical axis (z).

10. Device according to Claim 8 and 9, **characterized in that** the three axes of rotation (x, y, z) oriented at right angles to one another intersect at a common point in the centre of the force sensor (K).

11. Device according to Claim 9 or 10, **characterized in that** each of the three axes (x, y, z) of the central joint (G00) is assigned its own angle sensor (Wx, Wy, Wz).

12. Method for determining the inertial parameters of a body by means of a device according to one of the preceding claims, **characterized in that** a control system is provided, by means of which the holding platform (P) and a body (F10) secured thereon is moved in three degrees of freedom (x, y, z) about the central point of rotation (G00), the forces measured in the joints (G00, G20) and the angles measured in the central joint (G00) being supplied to an evaluation, with which the inertial parameters of the body (F10) are determined.

13. Method according to Claim 12, **characterized in that** in one step, the body is held statically and the proportion of the weight of the body is measured in each of the joints (G00, G20, G30) and/or the drives (Z1, Z2, Z3), the total weight of the body being determined by summing the forces measured in the joints (G00, G20, G30) and/or drives (Z1, Z2, Z3).

14. Method according to either of Claims 12 and 13, **characterized in that,** based on a coordinate system at the origin of which the central joint (G0Z) is arranged, from the position of the joints (G00, G20, G30) relative to one another and the weights measured in the joints (G00, G20, G30) and/or the drives (Z1, Z2, Z3), the position (cog_{P}^{K}) of the centre of gravity (cog_{F}^{K}) of the body (F10), projected into the plane of the holding platform (P), is determined.

15. Method according to Claim 14, **characterized in that** the holding platform (P) is tilted out of the horizontal position in a predefined angular range in at least one of the degrees of freedom (x, y, z), the position (cog_{P}^{K}) of the centre of gravity in the platform plane (P) in relation to measured angles being determined again during the tilting, and the height and/or position of the centre of gravity (cog_{F}^{K}) above the holding platform (P) being determined from the angle-dependent movement of the centre of gravity (cog_{P}^{K}).

16. Method according to one of Claims 12 to 15, **characterized in that** with knowledge of the position (cog_{F}^{K}) of the centre of gravity, the holding platform (P) is rotated about the three axes (x, y, z), in each case in a predefined angular range, the forces acting in the joints (G00, G20, G30) and/or the drives (Z1, Z2, Z3) being measured and the angle in the central joint (G00) being measured, and the inertial parameters being determined from the measured variables.

## Revendications

1. Dispositif de détermination de paramètres d'inertie d'un corps, ce dispositif comprenant une plateforme de réception (P) sur laquelle le corps (F10) peut être positionné et comportant une articulation (G00) sphérique centrale autour de laquelle la plateforme de réception (P) peut être déplacée et l'articulation (G00) sphérique centrale étant disposée sous la surface de plateforme de réception (P), **caractérisé en ce que** la plateforme de réception (P) peut être déplacée à l'aide d'entraînements (Z1, Z2, Z3) dans trois degrés de liberté (x, y, z), la plateforme de réception (P) étant reliée, via l'articulation (G00) centrale, à un châssis d'entraînement (AG) au niveau duquel au moins trois entraînements (Z1, Z2, Z3) sont disposés, ces entraînements s'accrochant, à une certaine distance de l'articulation (G00) centrale, à la plateforme de réception (P) dans les articulations (G20, G30).

2. Dispositif selon la revendication 1, **caractérisé en ce que** deux points d'accroche/articulations (G20, G30) sont prévus au niveau de la plateforme de réception (P) pour les entraînements (Z1, Z2, Z3), deux entraînements (Z1, Z2) s'accrochant dans un point d'accroche commun/une articulation commune (G20).

3. Dispositif selon la revendication 2, **caractérisé en ce que** les forces s'affrontant, du fait des deux entraînements (Z1, Z2), au niveau de l'articulation (G20) commune, au niveau de la plateforme de réception (P), sont orientées selon un angle inférieur à 90 degrés l'un par rapport à l'autre dans la position horizontale de la plateforme de réception (P).

4. Dispositif selon l'une quelconque des revendications précédentes, **caractérisé en ce que** chacune des articulations (G00, G20, G30) ou chacun des entraînements (Z1, Z2, Z3) comprend au moins un capteur de force (K, KS) avec lequel la force agissant dans l'articulation (G00, G20).

5. Dispositif selon l'une quelconque des revendications précédentes, **caractérisé en ce que** l'articulation (G00) centrale comprend au moins un dispositif de mesure d'angle (Wx, Wy, Wz) à l'aide duquel les mouvements angulaires peuvent être mesurés dans l'ensemble des trois degrés de liberté (x, y, z).

6. Dispositif selon l'une quelconque des revendications précédentes, **caractérisé en ce que** l'articulation (G00) centrale peut être bloquée au moyen d'un dispositif de blocage.

7. Dispositif selon l'une quelconque des revendications précédentes, **caractérisé en ce que** le corps (F10) est un véhicule automobile et qu'une liaison fixe peut être établie entre la plateforme de réception (P) et un bas de caisse de véhicule automobile du véhicule automobile maintenant en position le véhicule dans des états de compression des ressorts définis.

8. Dispositif selon l'une quelconque des revendications précédentes 2 à 7, **caractérisé en ce que** l'articulation (G20) commune comporte, dans le plan coaxial par rapport à l'axe de rotation (x) sur lequel l'articulation (G20) commune et l'articulation (G00) centrale reposent, un composant associé à la plateforme de réception (P), une partie d'articulation associée au côté d'entrée d'entraînement et un capteur de force (KS) reliant ces parties disposées entre, deux coques de palier de roulement (LS1, LS2) reposant l'une derrière l'autre dans le plan coaxial étant disposées de façon à pouvoir tourner sur la partie d'articulation (G20) autour de l'axe de rotation (x), ces coques étant respectivement reliées à un des entraînements (Z1, Z2).

9. Dispositif selon l'une quelconque des revendications précédentes, **caractérisé en ce que** l'articulation (G00) centrale comporte une plateforme de fixation (BP) à/dans laquelle une première plaque de palier de roulement (L1) est disposée de façon à pouvoir tourner dans le plan coaxial autour d'un axe vertical (z) relié, via un dynamomètre (K) à une deuxième plaque de palier de roulement (L2), la deuxième plaque de palier de roulement (L2) étant reliée/pouvant être reliée au châssis d'entraînement (AG) de façon articulée à la façon d'un cardan autour des deux axes de rotation (x, y), perpendiculairement à l'axe vertical (z).

10. Dispositif selon la revendication 8 et 9, **caractérisé en ce que** les trois axes de rotation (x, y, z) orientés perpendiculairement les uns par rapport aux autres se coupent en un point commun au centre du dynamomètre (K).

11. Dispositif selon la revendication 9 ou 10, **caractérisé en ce qu'**un capteur angulaire (Wx, Wy, Wz) propre est associé à chacun des trois axes (x, y, z) de l'articulation (G00) centrale.

12. Procédé de détermination des paramètres d'inertie d'un corps à l'aide d'un dispositif selon l'une quelconque des revendications précédentes, **caractérisé en ce qu'**un système de commande est prévu à l'aide duquel la plateforme de réception (P) et un corps (F10) fixé dessus est déplacé autour d'un point de rotation (G00) central dans trois degrés de liberté (x, y, z), les forces mesurées dans les articulations (G00, G20) et les angles mesurés dans l'articulation (G00) centrale étant amenés à un dispositif d'analyse à l'aide duquel les paramètres d'inertie du corps (F10) sont déterminés.

13. Procédé selon la revendication 12, **caractérisé en ce qu'**au cours d'une étape, le corps est maintenu statiquement et la force de pesanteur proportionnelle du corps est mesurée dans chacune des articulations (G00, G20, G30) et/ou des entraînements (Z1, Z2, Z3), la force de pesanteur totale du corps étant déterminée par l'addition des forces mesurées dans les articulations (G00, G20, G30) et/ou les entraînements (Z1, Z2, Z3).

14. Procédé selon l'une quelconque des revendications 12 ou 13, **caractérisé en ce que** l'articulation (G00) centrale est disposée à l'origine du système de coordonnées, par rapport à lui, la position (cog_{P}^{K}) du centre de gravité (cog_{F}^{K}) du corps (F10), projetée dans le plan de la plateforme de réception (P), est déterminée à partir de la position des articulations (G00, G20, G30) les unes par rapport aux autres et des forces de poids mesurant les articulations (G00, G20, G30) et/ou les entraînements (Z1, Z2, Z3).

15. Procédé selon la revendication 14, **caractérisé en ce que** la plateforme de réception (P) est basculée dans une plage angulaire prédéfinie dans au moins un des degrés de liberté (x, y, z) à partir de la position horizontale, sachant que pendant la bascule vers les angles mesurés, la position de centre de gravité (cog_{P}^{K}) est de nouveau déterminée dans le plan de plateforme (P) et que la hauteur et/ou la position du centre de gravité (cog_{F}^{K}) sur la totalité de la plateforme de réception (P) est déterminée à partir du déplacement, fonction de l'angle, du centre de gravité (cog_{P}^{K}).

16. Procédé selon l'une quelconque des revendications 12 à 15, **caractérisé en ce qu'**une fois connue la position du centre de gravité (cog_{F}^{K}), la plateforme de réception (P) peut tourner autour des trois axes (x, y, z) respectivement dans une plage angulaire prédéfinie, les forces agissant dans les articulations (G00, G20, G30) et/ou les entraînements (Z1, Z2, Z3) étant détectées et l'angle étant détecté dans l'articulation (G00) centrale et les paramètres d'inertie étant déterminés à partir des ordres de grandeur mesurés.
